# FASCICULE DE BREVET EUROPEEN

(11) **EP 4 383 558 B1**
(45) Date de publication et mention de la délivrance du brevet: **10.09.2025**
(21) Numéro de dépôt: 23214081.4
(22) Date de dépôt: 04.12.2023
(51) Int. Cl.: H02S 20/00, H02S 40/10

(54) **INSTALLATION SOLAIRE FLOTTANTE ET PROCÉDÉ DE MAINTENANCE D'UNE TELLE INSTALLATION SOLAIRE**
SCHWIMMENDE SOLARANLAGE UND VERFAHREN ZUR WARTUNG EINER SOLCHEN SOLARANLAGE
FLOATING SOLAR FACILITY AND METHOD FOR MAINTAINING SUCH A SOLAR FACILITY

(30) Priorité: 09.12.2022 FR 2213124
(43) Date de publication de la demande: 12.06.2024
(73) Titulaire: Ciel et Terre International, 59262 Sainghin en Melantois (FR)
(72) Inventeur: CARDON, Sylvain, 59155 FACHES THUMESNIL (FR)
(74) Mandataire: Plasseraud IP

(56) Documents cités:
- KR-A- 20200 106 655
- KR-B1- 101 822 307
- US-A1- 2014 109 334

## Description

### Domaine technique

La présente divulgation relève du domaine des installations solaire flottante configurées pour supporter des panneaux photovoltaïques. Au cours de la durée de vie, il peut arriver qu'un panneau photovoltaïque soit défaillant, par exemple en raison de l'approche de sa fin de durée de vie, ou encore que les câblages électriques, voire encore que les fixations de la structure nécessitent d'être inspectées/réparées.

La maintenance de l'installation requiert donc de pouvoir accéder, aux organes de l'installation en vue d'une inspection, voire d'une maintenance, et par exemple :
- de pouvoir démonter un panneau usé pour le remplacer par un panneau photovoltaïque en bon état de marche,
- de pouvoir inspecter, voire si nécessaire, refixer, remplacer le câblage électrique, voire resserrer voire remplacer les différentes fixations, par exemple des fixations assurant la tenue de la structure

### Technique antérieure

Il existe un premier type d'état de la technique des installations solaires flottantes qui prévoit la présence de couloir de maintenance entre deux rangées de panneaux photovoltaïques. La demande WO2012/139998A2 est un exemple d'une telle installation selon ce premier type.

Ce couloir de maintenance est agencé parallèlement à la direction longitudinale des rangées de panneaux, intercalé entre les deux rangées. Un opérateur peut alors circuler sur ce couloir de maintenance pour avoir accès aux différents panneaux photovoltaïques de la rangée, et éventuellement permettre leur remplacement, voire encore l'inspection du câblage et/ou des fixations. Ce couloir de maintenance présente une largeur, suivant une direction transversale à la rangée typiquement supérieure à 40 cm (par exemple 45 cm), et afin de laisser un dégagement suffisant pour la circulation d'un opérateur entre les deux rangées de panneaux photovoltaïques.

Une première limitation de ce type d'installation est qu'elle impose la présence de ces couloirs de maintenance, physiques, avec en particulier la présence de flotteurs formant le couloir de maintenance, comme divulgué par WO2012/139998A2 et qui doivent être dimensionnés pour assurer la reprise de la charge d'un opérateur.

Une deuxième limitation liée à cette solution avec couloir de maintenance est qu'elle oblige un espacement entre les deux rangées de panneaux photovoltaïques pour autoriser la circulation d'un opérateur, qui est une surface non recouverte par des panneaux photovoltaïques, diminuant en conséquence le rendement de production d'énergie électrique par unité de surface occupée par l'installation.

On connait encore un second type d'installation solaire flottante, par exemple du document WO 2021/219948 dont une structure d'entretoisement de l'installation assure un espacement entre une première rangée de panneaux photovoltaïques et une deuxième rangée photovoltaïque. Cette structure d'entretoisement est configurée pour être immergée pour permettre la circulation d'une unité de service flottante le long d'une voie navigable entre les deux rangées de panneaux.

Dans un tel état de la technique, la maintenance requiert donc l'utilisation d'unité de service flottante configurée pour circuler le long des voies navigables. Un tel état de la technique permet de diminuer sensiblement le dimensionnement des flotteurs de l'installation solaire flottante, et donc la quantité de matière nécessaire à leur réalisation et par rapport à l'état de la technique du premier type.

En revanche, il existe toujours un besoin pour un espacement non négligeable entre rangées de panneaux photovoltaïques pour permettre la création d'une voie navigable dont le dimensionnement en largeur permet d'assurer le passage d'une coque de l'unité de service destinée à conférer la flottabilité de l'unité de service en reprenant la charge de l'unité de service et de l'opérateur.

On connait également du document KR20200106655 un dispositif de surveillance et de nettoyage de la surface d'un panneau solaire flottant offshore, comprenant un cadre coulissant le long de deux bords d'un panneau solaire flottant. Le dispositif est notamment doté d'un module de brosse apte à nettoyer la surface du panneau solaire.

### Résumé

La présente divulgation vient améliorer la situation.

Il est proposé une installation solaire flottante selon la revendication 1, comprenant :
- des flotteurs conférant la flottabilité de l'installation
- au moins une rangée de panneaux photovoltaïques s'étendant suivant une direction longitudinale, fixée aux flotteurs, les panneaux photovoltaïques maintenus hors de l'eau par les flotteurs et un système de chariot configuré pour la maintenance des panneaux photovoltaïques, comprenant :
   - des rails de maintenance comprenant au moins un premier rail et un deuxième rail, s'étendant de manière parallèle, de part et d'autre de ladite au moins une rangée de panneaux photovoltaïques, suivant la direction longitudinale, espacés l'un de l'autre suivant une direction transversale
   - au moins un chariot de maintenance comprenant un châssis pourvu de premiers organes de roulement/glissement et des deuxième organes de roulement/glissement configurés respectivement pour circuler respectivement le long d'un premier rail et du second rail en étant guidés par les deux rails, et dans laquelle le chariot est configuré pour être déplacé le long des rails, le châssis configuré pour passer à cheval, au-dessus des panneaux photovoltaïques de ladite au moins une rangée.

Les rails de maintenance au sens de la présence divulgation sont donc des composants distincts et indépendants des panneaux photovoltaïques, configurés pour assurer la circulation dudit châssis dudit au moins un chariot de maintenance au-dessus des emplacements des panneaux photovoltaïques de la rangée de panneaux photovoltaïques, même si un ou plusieurs des panneaux photovoltaïques sont retirés.

Selon la présente divulgation, les rails de maintenance sont configurés pour assurer la circulation dudit châssis dudit au moins un chariot de maintenance au-dessus des emplacements des panneaux photovoltaïques de la rangée de panneaux photovoltaïques, même si un ou plusieurs des panneaux photovoltaïques sont retirés, voire même, selon un mode de réalisation au moins, si la totalité des panneaux photovoltaïques sont retirés.

Un tel chariot de maintenance autorise ainsi la maintenance des panneaux, typiquement par le retrait d'un ou plusieurs panneaux usés, leur évacuation par la circulation du chariot de maintenance le long des rails et leur remplacement par un ou plusieurs panneaux neufs

Les caractéristiques exposées dans les paragraphes suivants peuvent, optionnellement, être mises en œuvre. Elles peuvent être mises en œuvre indépendamment les unes des autres ou en combinaison les unes avec les autres :
Selon un mode de réalisation, le chariot de maintenance et les rails de maintenance sont configurés pour déplacer au moins un opérateur embarqué sur le châssis du charriot de maintenance : en particulier le chariot de maintenance , ainsi que les rails de maintenance (et de manière générale ladite installation) peuvent être typiquement configurés pour résister à la charge d'un opérateur, voire deux opérateurs embarqués sur le charriot, et typiquement un poids supérieur ou égal à 100 kg typiquement pour deux opérateurs.

Selon un mode de réalisation, le chariot de maintenance est motorisé et comporte un module de commande pour assurer son déplacement autonome ou télécommandé, suivant les rails de maintenance.

Selon mode de réalisation, l'installation peut comprendre plusieurs rangées de panneaux, s'étendant parallèles les unes aux autres suivant la direction longitudinale, les panneaux des différentes rangées espacés les uns des autres suivant la direction transversale et comprenant une pluralité de couples de rails, espacés suivant la direction transversale, y compris au moins un premier couple de rails autorisant la circulation du chariot de maintenance à cheval sur les panneaux photovoltaïques d'une première rangée et au moins un deuxième couple de rails autorisant la circulation du chariot de maintenance à cheval sur les panneaux photovoltaïque d'une autre rangée de panneau, distinct de la première rangée en particulier une deuxième rangée.

Selon un mode de réalisation, la première rangée de panneaux photovoltaïques et la deuxième rangée de panneaux photovoltaïques sont espacées, suivant la direction transversale d'un écart δ, autorisant la circulation des premiers organes de roulement/glissement ou des deuxièmes organes de roulement/glissement , sur un rail de maintenance intercalaire, et dans laquelle la dimension de l'écart δ est inférieure 40 cm, voire inférieure à 35 cm, voire inférieure à 25 cm, voire exemple inférieure à 15 cm. Un tel écart δ, faible, permet de maximiser et densifier le rendement énergétique de production électrique par unité de surface de l'installation solaire flottante, en minimisant les surfaces non utilisées pour le captage des rayonnement solaires, et par comparaison aux installations solaires flottantes comportant des allées de maintenance entre les rangées de panneaux pour lesquelles cet écart est typiquement supérieur à 40 cm pour autoriser la circulation d'un opérateur.

Selon un mode de réalisation, le système de chariot comprend un chariot de transbordement, déplaçable le long de rails de transbordement s'étendant en longueur suivant la direction transversale, espacés l'un de l'autre suivant la direction longitudinale, et dans laquelle le chariot de transbordement est configuré pour supporter le chariot de maintenance et assurer le transfert du chariot de maintenance depuis une première position du chariot de transbordement configurée pour assurer le chargement du chariot de maintenance à partir du premier couple de rails, et jusqu'à une deuxième position du chariot de transbordement configurée pour assurer le déchargement du chariot de maintenance sur l'autre couple de rails, en particulier le deuxième couple.

En particulier, le châssis du chariot de transbordement comprend des rails supports configurés pour coopérer avec le chariot de maintenance, les rails supports configurés pour être alignés respectivement avec les rails du premier couple de rails dans la première position du chariot de transbordement, et être alignés respectivement avec les rails de l'autre couple de rails, dans la deuxième position du chariot de transbordement. De manière générale, le chariot de transbordement permet avantageusement à un unique chariot de maintenance de circuler, successivement, sur différentes rangées de panneaux, en facilitant les opérations de transbordement du chariot de maintenance depuis un couple de rails jusqu'à un autre couple de rails.

Selon un mode de réalisation, le chariot de maintenance des panneaux comprend une structure de portique, en U inversé, comprenant :
- une première structure verticale, assurant le support des premiers organes de roulement/glissement,
- une deuxième structure verticale assurant le support des deuxièmes organes de roulement/glissement
- une structure transversale, s'étendant suivant la direction transversale, destinée à circuler au-dessus des panneaux de ladite au moins rangée, la structure transversale reliant la première structure verticale et la deuxième structure verticale.

Les premiers organes de roulement/glissement et les deuxièmes organes de roulement/glissement sont configurés pour circuler sur le premier rail et le second rail, agencés en tout ou partie à une hauteur sous le niveau des panneaux de ladite au moins rangée.

Selon un mode de réalisation, le chariot de maintenance comprend une extension repliable configurée pour passer d'une position escamotée, de moindre encombrement sur la structure de portique, jusqu'à une position déployée pour laquelle ladite extension s'étend en porte-à-faux de la structure de portique du chariot pour venir à cheval d'une rangée de panneaux photovoltaïques, consécutive à ladite au moins une rangée au-dessus de laquelle circule la structure transversale.

Selon une possibilité, le chariot de maintenance est un chariot de maintenance simple s'étendant suivant la direction transversale pour venir à cheval sur une unique rangée de panneaux photovoltaïques. Selon une autre possibilité, le chariot de maintenance est un chariot de maintenance multiple s'étendant suivant la direction transversale pour venir à cheval sur une pluralité de rangée de panneaux solaire.

Selon un mode de réalisation, les panneaux photovoltaïques de ladite au moins une rangée sont fixés aux rails de maintenance, au-dessus des rails de maintenance, par l'intermédiaire d'interfaces mécaniques telle que des équerres de fixation, laissant un dégagement libre le long des rails pour la circulation des organes de glissement/roulement, premiers organes de roulement/glissement et des deuxièmes organes de roulement/glissement.

Selon un mode de réalisation, les rails de maintenance sont fixés aux flotteurs.

Selon un mode de réalisation, le chariot de maintenance est pourvu d'un système de nettoyage comprenant :
- des buses de pulvérisation, orientées de sorte à projeter un fluide de nettoyage sur les panneaux photovoltaïques de la rangée au-dessus de laquelle se déplace le chariot de maintenance, et/ou
- des moyens de brossage tels qu'une brosse, configurés de sorte à brosser les panneaux photovoltaïques de la rangée au-dessus de laquelle se déplace le chariot de maintenance.

Selon un mode de réalisation, l'installation comprend un onduleur configuré pour transformer le courant continu issu des panneaux photovoltaïques en courant alternatif utilisable par le réseau supporté par un ou plusieurs flotteurs, et dans laquelle l'installation comprend des second rails de maintenance, orientés suivant la direction transversale, espacés suivant la direction longitudinale de part et d'autre de l'onduleur, ainsi qu'un chariot de maintenance de l'onduleur circulant sur les second rails configuré pour soulever l'onduleur et l'évacuer.

La présente divulgation concerne encore un procédé de maintenance d'une installation solaire selon la revendication 15 comprenant un déplacement du chariot de maintenance, le long de la direction longitudinale X, au-dessus d'une rangée des panneaux photovoltaïques, convenant pour le remplacement d'un panneau photovoltaïque, l'inspection de l'installation, ou encore le nettoyage des panneaux photovoltaïques.

En particulier le procédé de maintenance peut typiquement comprendre:
- un retrait d'au moins un panneau photovoltaïque usé depuis un emplacement du panneau usé sur ladite installation solaire flottante, et son évacuation par un soutien du panneau usé par le chariot de maintenance, et un déplacement du chariot de maintenance au moins suivant la direction longitudinal X des rails de maintenance , et/ou
- une mise en place d'un panneau photovoltaïque , en particulier neuf, par son support par le chariot de maintenance , et le déplacement du chariot de maintenance le long des rails de maintenance jusqu'à un emplacement de montage sur ladite installation solaire flottante.

### Brève description des dessins

D'autres caractéristiques, détails et avantages apparaîtront à la lecture de la description détaillée ci-après, et à l'analyse des dessins annexés, sur lesquels :
**Fig. 1**

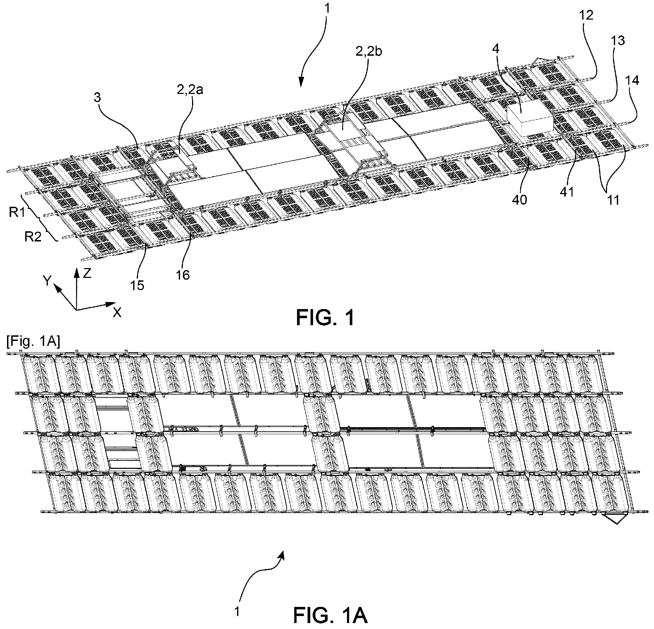

   [Fig. 1] illustre en perspective un mode de réalisation d'une installation solaire flottante selon la présente divulgation comprenant des flotteurs, et deux rangées de panneaux, parallèles entre elles, s'étendant en longueur suivant une direction en longueur, les deux rangées espacées suivant une direction transversale, ainsi qu'un système de chariot comprenant :
   - un chariot de maintenance, configuré pour se déplacer suivant la direction longitudinale à cheval, à titre d'exemple sur une rangée de panneau, le long de rail de maintenance,
   - un chariot de transbordement déplaçable le long de rails de transbordement, orientés suivant une direction transversale configuré pour transborder le chariot de maintenance depuis un premier couple de rails de maintenance, jusqu'à un deuxième couple de rails de maintenance .
**Fig. 1A**
   [Fig. 1] est une vue de dessous de la figure 1, illustrant le positionnement des panneaux photovoltaïques fixés à des poutres, longitudinales de la structure, les poutres reliant des flotteurs entre eux, espacés entre eux suivant la direction longitudinale en positionnant les panneaux photovoltaïques au-dessus de l'eau au niveau d'espaces vides favorisant le refroidissement des panneaux.
**Fig. 2**

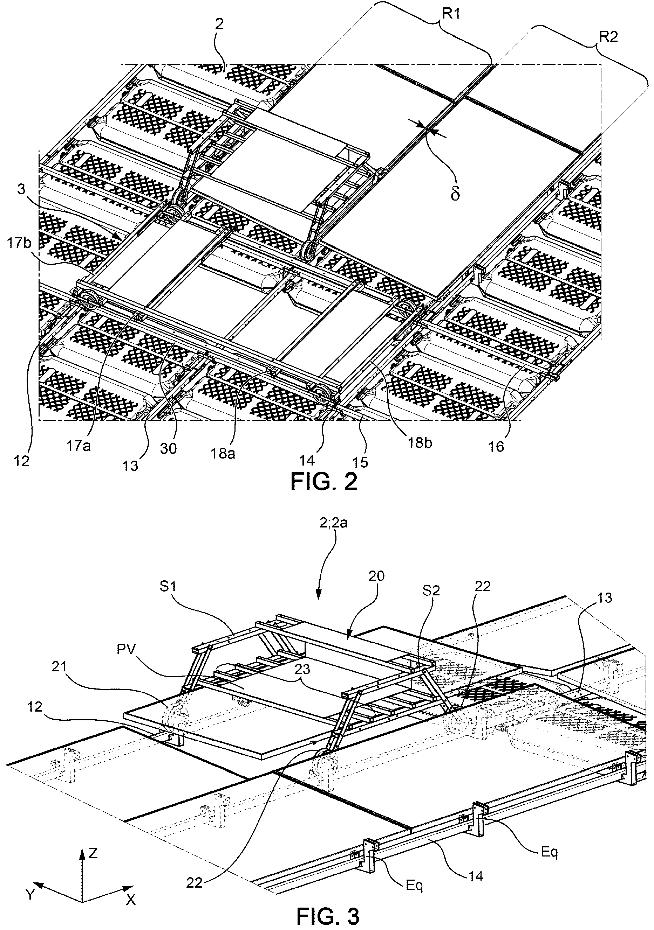

   [Fig. 2] est une vue de détail qui comprend le chariot de transbordement, ainsi que le chariot de maintenance, qui a été déchargé du chariot de transbordement, le chariot de maintenance étant à titre d'exemple non limitatif un chariot de maintenance simple, configuré pour circuler à cheval sur une unique rangée de panneaux photovoltaïques.
**Fig. 3**
   [Fig. 3] est une vue de détail illustre le chariot de maintenance simple, sous le châssis duquel est suspendu un panneau photovoltaïque, intercalé entre la première structure verticale et la deuxième structure verticale du châssis.
**Fig. 4**

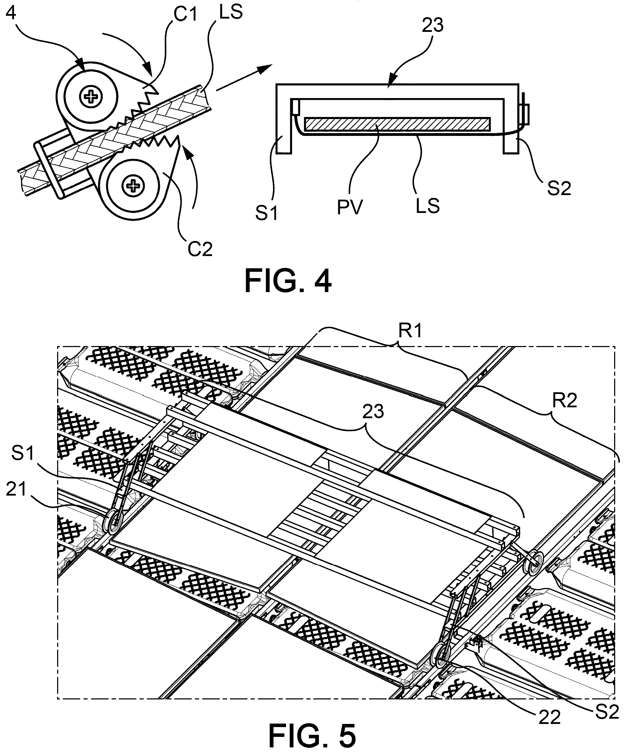

   [Fig. 4] montre à droite une vue de coupe partielle, illustrant la suspension du panneau maintenu par un lien souple, le lien bloqué dans un taquet à cames sur le châssis du chariot, et à gauche une vue de détail du taquet à cames.
**Fig. 5**

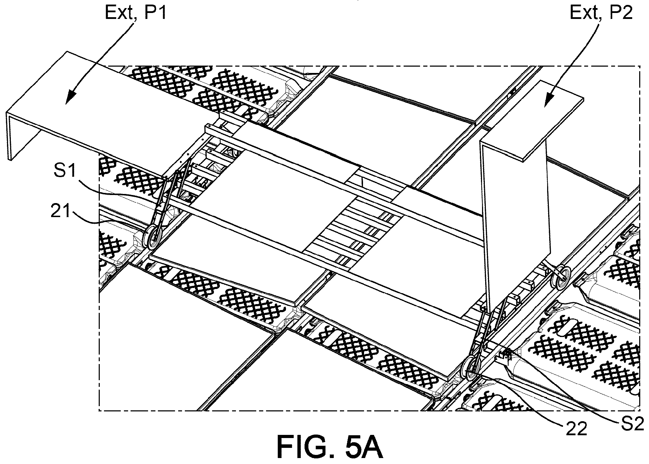

   [Fig. 5] montre d'un chariot de maintenance multiple, en ce sens qu'il est configuré pour venir à cheval sur plusieurs rangées de panneaux photovoltaïques, suivant la direction transversale, en particulier à cheval sur deux rangées de panneaux, les deux rangées de panneaux s'étendant en parallèle suivant la direction longitudinale espacées l'une de l'autre suivant la direction transversale.
**Fig. 5a**
   [Fig. 5a] est une vue d'une alternative du chariot de maintenance, qui est illustré comme multiple, mais qui peut être simple, pourvue de manière notable d'une extension repliable, voire de deux extensions repliables telles qu'illustrées, sur les côtés du chariot de maintenance, ladite extension repliable configurée pour passer d'une position escamotée de moindre encombrement du chariot (suivant la direction transversale) jusqu'à une position déployée pour laquelle l'extension s'étend en porte à faux du portique du chariot pour s'étendre au-dessus d'une rangée de panneaux photovoltaïques, consécutive, la figure 5a illustrant à titre d'exemple, une première extension, gauche, dans sa position déployée donnant accès à une rangée de panneaux (non illustrés), à gauche, et une deuxième extension, droite, dans sa position rétractée, de moindre encombrement, repliée sur le portique du chariot.
**Fig. 6**

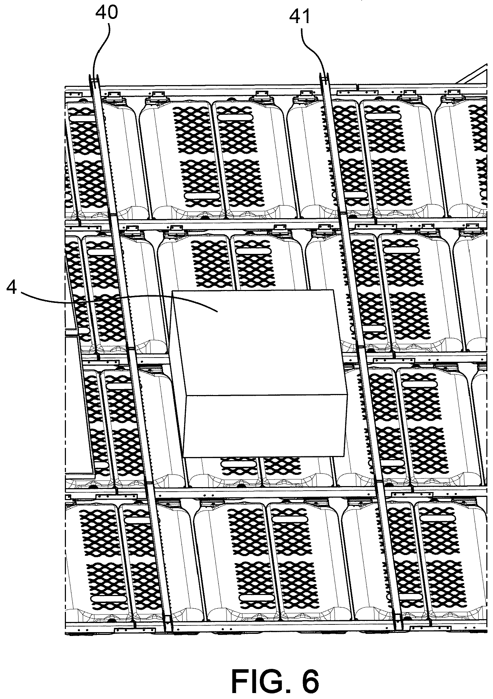

   [Fig. 6] est une vue d'un onduleur configuré pour transformer le courant continu issu des panneaux photovoltaïques en courant alternatif utilisable par le réseau, ledit onduleur supporté par un ou plusieurs flotteurs, avec la présence des seconds rails de maintenance, orientés suivant la direction transversale, espacés suivant la direction longitudinale de part et d'autre de l'onduleur, pour un chariot de maintenance de l'onduleur circulant sur les second rails, configuré pour soutenir l'onduleur et l'évacuer.
**Fig. 7**

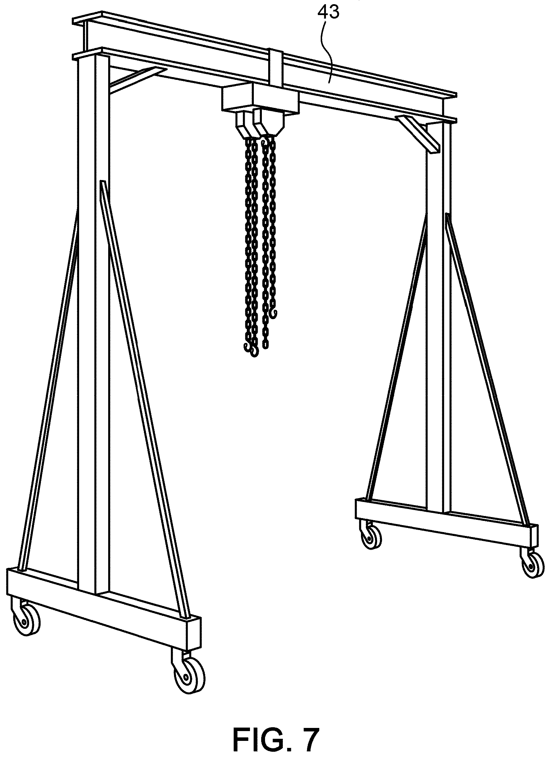

   [Fig. 7] est un exemple de chariot de maintenance de l'onduleur.
**Fig. 8**

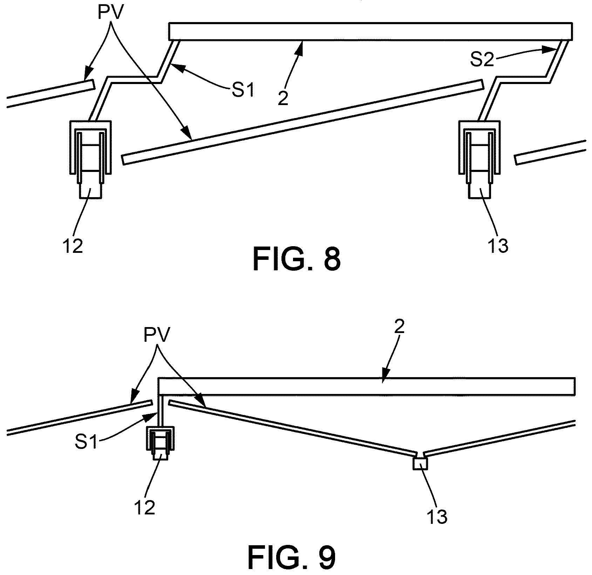

   [Fig. 8] est une configuration avantageuse permettant de limiter l'écartement entre deux rangées de panneaux, avec présence d'un rail intercalaire nécessaire au déplacement du chariot de maintenance qui est intercalé entre les deux rangées, les deux rangées de panneaux étant inclinées suivant une simple inclinaison.
**Fig. 9**
   [Fig. 9] est une configuration avantageuse, permettant de limiter l'écartement entre deux rangées de panneaux, avec présence d'un rail intercalaire nécessaire au déplacement du chariot de maintenance qui est intercalé entre les deux rangées, les deux rangées de panneaux étant inclinées suivant une double inclinaison, le rail intercalaire à l'aplomb d'un sommet à l'intersection des plans passant par les panneaux des deux rangées.

### Description des modes de réalisation

Les dessins et la description ci-après contiennent, pour l'essentiel, des éléments de caractère certain. Ils pourront donc non seulement servir à mieux faire comprendre la présente divulgation, mais aussi contribuer à sa définition, le cas échéant.

Il est maintenant fait référence à la figure 1 qui illustre à titre indicatif une installation solaire flottante selon la présente divulgation.

Aussi, l'installation selon la présente divulgation comprend :
- des flotteurs 11 conférant la flottabilité de l'installation,
- au moins une rangée R1, R2 de panneaux photovoltaïques s'étendant suivant une direction longitudinale X, fixée aux flotteurs, les panneaux photovoltaïques maintenus hors de l'eau par les flotteurs.

De manière générale, les panneaux photovoltaïques présentent une dimension en longueur, de plus grande dimension et une dimension en largeur de plus petite dimension.

Selon une possibilité illustrée, les panneaux photovoltaïques peuvent être orientés, suivant leur direction en longueur, suivant la direction longitudinale X, la direction en largeur du panneau étant inclinée par rapport à l'horizontale. Selon une autre possibilité (non illustrée), les panneaux peuvent être orientés suivant leur direction en largeur suivant la direction longitudinale X, la direction en longueur étant inclinée par rapport à l'horizontale.

De manière générale, la direction longitudinale X peut être orientée suivant la direction Est-Ouest, et la direction transversale Y peut être orientée suivant la direction Nord-Sud. Les panneaux photovoltaïques peuvent être inclinés par rapport à l'horizontal. Les inclinaisons des panneaux entre les rangées R1, R2 peuvent être identiques, ou différentes, voire les panneaux peuvent être inclinés selon des inclinaisons opposées. Dans ce dernier cas, la direction X peut être généralement orientée suivant la direction Nord/Sud et la direction Y orientée suivant la direction Est-Ouest.

Toutefois de préférence, les panneaux photovoltaïques PV appartenant à une même rangée présente sensiblement la même inclinaison et sont coplanaires. Cela peut permettre de faciliter leur nettoyage par circulation d'un robot sur la rangée.

Une installation comporte typiquement plusieurs rangées de panneaux photovoltaïques, en particulier en fonction des capacités de production. La figure 1 illustre un exemple à titre d'exemple non limitatif comportant seulement deux rangées, avec une première rangée R1 de panneaux photovoltaïques et une deuxième rangée R2 de panneaux photovoltaïques. Il est bien entendu que le nombre de rangées peut être supérieur à 2, par exemple de nombre égal à 3, 4, 5, ou bien plus.

Une telle installation s'étend globalement suivant sa structure dans un plan XY, sensiblement horizontale, et en hauteur suivant la direction verticale Z.

Ces rangées de panneaux photovoltaïques R1, R2 s'étendant en longueur, de manière parallèle selon la direction longitudinale X, et sont espacées les unes des autres, suivant la direction transversale Y

Les flotteurs 11 peuvent être typiquement des composants plastiques conférant la flottabilité de l'installation. Les flotteurs peuvent, par exemple être obtenus par extrusion soufflage, injection soufflage, ou tout autres techniques connues de la personne du métier.

De manière générale, les panneaux photovoltaïques PV peuvent être fixés directement aux flotteurs 11. Encore selon un mode de réalisation notamment illustré, les panneaux photovoltaïques PV des rangées peuvent être fixés aux flotteurs par l'intermédiaire de poutres, elles-mêmes fixées aux flotteurs.

De manière générale, et comme illustré à titre indicatif à la figure 1A, les poutres peuvent avantageusement permettre le positionnement des panneaux photovoltaïques fixés auxdites poutres, notamment longitudinales de la structure, les poutres reliant des flotteurs entre eux.

On remarque que les flotteurs 11 peuvent être espacés entre eux suivant la direction longitudinale X en positionnant les panneaux photovoltaïques PV au-dessus de l'eau et de manière notable au niveau d'espace-vide favorisant le refroidissement des panneaux. Des tels espace vides sous panneaux, sont bien visibles à la figure 2 pour laquelle l'installation est vue de dessous. Ils permettent à l'eau de refroidir efficacement le dessous de panneaux par les phénomènes de convection entre la surface d'eau et le dessous des panneaux photovoltaïques.

Au moins selon un mode de réalisation avantageux, (illustré) les rails de maintenance 12, 13,14 peuvent constituer avantageusement tout ou partie des poutres assurant le support des panneaux photovoltaïques PV. Alternativement, les rails de maintenance et les poutres support peuvent être constitués par des composants distincts.

Comme visible à titre indicatif à la figure 1, de manière notable, l'installation comprend un système de chariot configuré pour la maintenance des panneaux photovoltaïques PV.

Un tel système de chariot comprend de manière notable :
- des rails de maintenance 12,13,14 comprenant au moins un premier rail 12 et un deuxième rail 13, s'étendant de manière parallèle, de part et d'autre de ladite rangée de panneaux photovoltaïques R1, R2, suivant la direction longitudinale X, le premier rail et le deuxième rail espacés l'un de l'autre suivant une direction transversale Y
- au moins un chariot de maintenance 2 comprenant un châssis 20 pourvu de premiers organes de roulement/glissement 21 et des deuxième organes de roulement/glissement 22. Aux figures les premiers et deuxième organes 21 et 22 sont tous deux constitués par des roues.

De manière générale, les rails de maintenance 12, 13, 14, sont typiquement agencés sous le niveau les panneaux photovoltaïques, en tout ou partie. Les figures donnent un mode de réalisation pour lequel les rails de maintenance 12, 13, 14 sont tous agencés en hauteur sous le niveau des panneaux photovoltaïques, et typiquement entre les panneaux photovoltaïques des rangées. Selon un autre mode de réalisation (non illustré) l'un des rails (premier rail 12 ou deuxième rail 13) coopérant avec le chariot de maintenance peut être agencé sous le niveau des panneaux photovoltaïques de rangées, alors que l'autre rail (respectivement deuxième rail 13 ou premier rail 12) peut être agencé à une hauteur supérieure, par exemple au niveau du haut des panneaux photovoltaïques.

Les premiers organes 21 et les deuxièmes organes 22 sont configurés respectivement pour circuler respectivement le long d'un premier rail 12 et du second rail 13 en étant guidés par les deux rails, le chariot étant configuré pour être déplacé le long des rails, le châssis configuré pour passer à cheval des panneaux photovoltaïque de ladite au moins une rangée R1 ; R2.

Un tel chariot de maintenance 2 peut ainsi permettre à au moins un opérateur de se déplacer sur l'installation le long des rails de maintenance, en coulissant le long des rails, et en se déplaçant avantageusement, à cheval de la rangée de panneaux photovoltaïques PV. Avantageusement, on supprime le besoin d'allée de maintenance physique entre les rangées de panneaux.

Alternativement ou additionnellement, le chariot de maintenance peut être motorisé et en particulier comporter un module de commande pour assurer son déplacement autonome ou télécommandé, suivant les rails de maintenance.

Selon la présente divulgation, les rails de maintenance 12, 13, 14 sont configurés pour assurer la circulation dudit châssis 20 dudit au moins un chariot de maintenance 2 au-dessus des emplacements des panneaux photovoltaïques de la rangée R1 ; R2 de panneaux photovoltaïques, même si un ou plusieurs des panneaux photovoltaïques sont retirés, voire même si la totalité des panneaux photovoltaïques sont retirés, et en particulier en vue de pouvoir autoriser la maintenance des panneaux, typiquement le retrait d'un ou plusieurs panneaux usés, et leur remplacement par un ou plusieurs panneaux neufs.

Les rails de maintenance au sens de la présence divulgation sont donc des composants distincts et indépendants des panneaux photovoltaïques, qui s'étendent sur une longueur égale à au moins un panneau photovoltaïque, voire typiquement supérieure à la longueur de plusieurs panneaux de la rangée selon la direction longitudinale X. En particulier et en conséquence, lorsque les panneaux photovoltaïques comprennent des cellules typiquement silicium et un cadre métallique, typiquement en aluminium constitué de quatre profilés métallique, bordant les quatre côtés des cellules, les rails de maintenance 12,13,14 au sens de la présente divulgation ne sont pas constitués par les profilés du cadre des panneaux photovoltaïques.

Un autre avantage de cette solution est qu'elle peut être mise en œuvre, avec un écart faible, repéré δ à la figure 2, suivant la direction transversale Y entre deux rangées R1, R2 de panneaux photovoltaïques consécutives, même lorsqu'un rail de maintenance doit être agencé pour la circulation du chariot entre ces deux rangées R1, R2.Un tel écart, faible, typiquement inférieur ou égal à 40 cm, par exemple inférieur ou égal à 25 cm participe à l'obtention d'une installation solaire flottante présentant un rendement électrique par unité de surface occupée par l'installation sensiblement amélioré, en particulier par rapport à l'état de la technique précité, du premier type (avec allée de maintenance) ou du deuxième type (avec unité de service flottante).

Le chariot de maintenance 2, ainsi que les rails de maintenance 12, 13, (et de manière générale ladite installation) peuvent être typiquement configurés pour résister à la charge d'un opérateur, voire deux opérateurs embarqués sur le charriot, et typiquement un poids supérieur ou égal à 100 kg typiquement pour deux opérateurs

De manière générale, le chariot de maintenance des panneaux 2 peut comprendre une structure de portique en U inversé, comprenant une première structure verticale S1, assurant le support des premiers organes de roulement/glissement 21 (par exemple un couple de roues), une deuxième structure verticale S2 assurant le support des deuxièmes organes de roulement/glissement 22, (par exemple un couple de roues), et une structure transversale 23, s'étendant suivant la direction transversale Y, destinée à circuler au-dessus des panneaux photovoltaïques PV de ladite au moins rangée R1, R2. La structure transversale 23 relie la première structure verticale S1 et la deuxième structure verticale S2, de préférence en une partie supérieure des structures verticales S1, S2.

Les premiers organes de roulement/glissement 21 peuvent comprendre deux organes de roulement/glissement, espacés suivant la direction longitudinale X et être maintenus en partie basse la première structure verticale S1.

Les deuxièmes organes de roulement/glissement 22 peuvent comprendre deux organes de roulement/glissement, espacés suivant la direction longitudinale X et être maintenus en partie basse la deuxième structure verticale S2.

Les premiers organes de roulement/glissement 21 et les deuxièmes organes de roulement/glissement sont configurés pour circuler sur le premier rail 12 et le second rail 13 agencés en tout ou partie sous le niveau des panneaux de ladite au moins rangée R1 ; R2, en particulier entre les rangées R1, R2.

De manière généralement, la dimension de la première structure verticale S1 ou de la deuxième structure verticale S2, suivant la direction transversale Y est inférieure à l'écart δ, et afin d'autoriser la circulation de la structure verticale (première S1 ou deuxième S2) au niveau du dégagement entre deux rangées de panneaux.

Selon un mode de réalisation avantageux, le chariot de maintenance 2 peut comprendre une extension EXT repliable configurée pour passer d'une position escamotée P2, de moindre encombrement sur la structure de portique, jusqu'à une position déployée P1 pour laquelle ladite extension EXT s'étend suivant la direction transversale Y, en porte-à-faux de la structure de portique du chariot pour venir à cheval d'une rangée de panneaux photovoltaïques, consécutive à ladite au moins une rangée R1, R2 au-dessus de laquelle circule la structure transversale 23.

La figure 5a illustre un chariot de maintenance comportant deux dites extensions EXT repliables, des deux côtés de la structure en portique du chariot. De manière générale, la ou les extensions EXT repliables peuvent être articulés en pivot au portique, et prolonger la structure transversale 23, dans la position déployée P1.

Comme compréhensible des figures 3 ou 4 notamment, et de manière générale, le chariot de maintenance 2 peut comprendre un système de suspension comportant une ou plusieurs liaisons souples LS, configurée(s) pour suspendre un panneau photovoltaïque sous la structure transversale 23 de la structure du portique, la panneau photovoltaïque PV interposé entre la première structure verticale S1 et la deuxième structure verticale S2.

Un tel système de suspension permet de suspendre de manière sécurisé le panneau sous la structure transversale 23, et alors qu'un opérateur peut être supporté au-dessus de la structure transversale 23.

Le système de suspension peut comprendre un taquet à cames 4, qui comprend deux cames de serrage C1, C2, rappelés élastiquement l'une vers l'autre entre lesquels, le lien souple (par exemple une corde) peut être pincé.

Le sens de rappel de cames permet de tirer sur le lien souple, de sorte à autoriser le glissement du lien souple entre les deux cames suivant un premier sens afin de tendre le lien souple. La tension du lien souple LS assure le maintien du panneau photovoltaïque pris en sandwich entre la sous face de la structure transversale 23 et le lien souple LS mis en tension. Le sens de rappel des cames s'oppose au desserrage du lien souple par glissement du lien souple dans le sens opposé au premier sens. Un tel taquet à cames est bien connu du monde du nautisme et sa structure n'est pas développée plus en détail.

Selon un mode de réalisation, le chariot de maintenance 2 de panneau peut être un chariot de maintenance simple 2a s'étendant suivant la direction transversale Y pour venir à cheval sur une unique rangée de panneaux photovoltaïques R1 ou R2. La dimension du chariot de maintenance 2a suivant la direction transversale est donc supérieur (typiquement légèrement) à la dimension d'une rangée (R1 ou R2), suivant la direction transversale, mais toutefois inférieur à deux rangées de panneaux (R1 et R2), suivant cette direction transversale.

Selon un mode de réalisation, le chariot de maintenance 2 de panneau peut être un chariot de maintenance multiple 2b s'étendant suivant la direction transversale Y pour venir à cheval sur une pluralité de rangée de panneaux solaire R1, R2. La figure 2 donne un exemple pour lequel le chariot s'étend seulement sur deux rangées de panneaux R1 et R2. Le chariot de maintenance multiple peut s'étendre sur un nombre de panneaux supérieur à 2, tel que 3, 4 ou 5.

L'installation solaire flottante peut comprendre typiquement les plusieurs rangées de panneaux R1, R2, les rangées s'étendant parallèles l'une à autre suivant la direction longitudinale X, les panneaux des différentes rangées espacés les uns des autres suivant la direction transversale Y.

L'installation peut comprendre une pluralité de couples de rails 12,13 ;13,14, espacés suivant la direction transversale, y compris au moins un premier couple de rails 12,13 autorisant la circulation du chariot de maintenance 2 à cheval sur les panneaux photovoltaïques PV d'une première rangée R1 et au moins un deuxième couple de rails 13,14 autorisant la circulation du chariot de maintenance 2 à cheval sur les panneaux photovoltaïques d'une autre rangée de panneau, distinct de la première rangée R1, en particulier une deuxième rangée R2.

Deux couples successifs peuvent éventuellement partager un rail commun, en l'occurrence le rail 13 entre le premier et le deuxième couple. En particulier le premier couple de rails peut comprendre le premier rail 12 et le deuxième rail 13, et le deuxième couple de rails peut comprendre le deuxième rail 13 et le troisième rail 14. Le deuxième rail est un rail, s'étendant, intercalé entre la première rangée R1 et la deuxième rangée R2.

Selon un mode de réalisation avantageux, le système de chariot comprend un chariot de transbordement 3, déplaçable le long de rails de transbordement 15, 16 s'étendant en longueur suivant la direction transversale Y, espacés suivant la direction longitudinale X.

Le chariot de transbordement est configuré pour supporter le chariot de maintenance 2, 2a, 2b et assurer le transfert du chariot de maintenance 2 depuis une première position du chariot de transbordement configuré pour assurer le chargement du chariot de maintenance à partir du premier couple de rails 12,13, et jusqu'à une deuxième position du chariot de transbordement 3 configuré pour assurer le déchargement du chariot de maintenance sur l'autre couple de rails 13,14, en particulier le deuxième couple, ou inversement.

A cet effet, le châssis 30 du chariot de transbordement peut comprendre des rails supports 17a,18a ; 17b, 18b, configurés pour être alignés respectivement avec les rails du premier couple de rails 12,13 dans la première position du chariot de transbordement 3 pour permettre le chargement/déchargement du chariot de maintenance en faisant rouler le chariot depuis le premier couple de rail 12,13 jusqu'aux rails supports 17a,18a : 17b, 18b lors du chargement, ou inversement lors du déchargement, et être alignés respectivement avec les rails de l'autre couple de rails 13,14, dans la deuxième position du chariot de transbordement 3 pour permettre le chargement/déchargement du chariot de maintenance en faisant rouler le chariot depuis le deuxième couple de rail 13,14 jusqu'aux rails supports 17a,18a : 17b, 18b, lors du chargement, ou inversement lors du déchargement.

A la figure 2, les rails 17a, 18a sont les rails support associés à l'entraxe du au chariot de maintenance simple 2a, alors que les rails 17b, 18b sont les rails support à l'entraxe du chariot de maintenance multiple 2B.

De manière générale, le chariot de transbordement 3 permet avantageusement à un unique chariot de maintenance de circuler, successivement, sur différentes rangées de panneaux, en facilitant les opérations de transbordement du chariot de maintenance 2 depuis un couple de rails jusqu'à un autre couple de rails. Alternativement, l'opérateur peut porter le chariot entre les couples de rails associés respectivement chaque rangée, pour déplacer le chariot de maintenance d'une rangée R1 de panneaux, à l'autre rangée de panneaux R2. On évite de préférence la nécessité de prévoir plusieurs chariots de maintenances, associés aux différents couples de rails pour assurer la maintenance sur l'ensemble des rangées de panneaux.

De manière générale, le chariot de maintenance 2 et/ou le chariot de transbordement 3 peuvent comprendre une motorisation, en particulier embarquée au chariot. Par exemple, la motorisation peut comprendre une roue motorisée, typiquement électrique, appartenant typiquement aux organes de roulement, configurée pour rouler sur les rails 12,13, 14. La motorisation peut comprendre encore un système de traction typiquement à câble motorisé.

De manière générale, la première rangée de panneaux photovoltaïques R1 et la deuxième rangée de panneaux photovoltaïques R2 sont espacées, suivant la direction transversale Y d'un écart δ, autorisant la circulation des premiers organes de roulement/glissement 21 ou des deuxièmes organes de roulement/glissement sur un rail de maintenance 13, intercalaire entre les deux rangées R1 et R2. La dimension δ est de préférence inférieure à 40 cm, de préférence inférieure à 35 cm, voire inférieure à 30 cm, voire inférieure 25 cm, voire inférieure à 15 cm.

La figure 8 illustre un mode de réalisation, lorsque les panneaux photovoltaïques sont en simple orientation, à savoir inclinés suivant la même inclinaison entre les deux rangées R1, R2. Comme visible sur la figure 8, il est possible de fortement abaisser l'écartement δ, en jouant sur la forme des structures verticales S1, S2. De manière générale ; on remarque que l'écartement δ peut être si faible que les rails 12, 13 sont recouverts au moins partiellement, selon la direction transversale Y, par les panneaux photovoltaïque PV des rangées. Il est notamment possible de diminuer l'écart δ à ce qui est strictement nécessaire en simple orientation, à savoir que les différents panneaux photovoltaïques inclinés suivant la même inclinaison sont écartés de l'écart δ strictement nécessaire pour éviter les effets d'ombrage entre les panneaux des deux rangées R1 R2, qui est typiquement de l'ordre de 250 mm à 300mm pour une inclinaison de 10° à 15° telle que12° et typiquement de 100 mm à 150 mm pour inclinaison de panneau de l'ordre de 3° à 7° telle que 5°.

La figure 9 illustre un mode de réalisation lorsque les panneaux photovoltaïques des deux rangées R1, R2, sont inclinés suivant une double orientation, à savoir selon des inclinaisons opposées. Les panneaux photovoltaïques PV des deux rangées sont orientés suivant deux plans, inclinés l'un par l'autre, qui se s'intersectent suivant une arête commune, au niveau du sommet des panneaux des deux rangées R1, R2. Les rails 12 13 sont alignés à l'aplomb des sommets des panneaux. Les structures verticales des portiques du chariot de maintenance, traversent les rangées de panneaux, au niveau des sommets.

Selon un mode de réalisation avantageux, les panneaux de ladite au moins une rangée R1, R2 sont fixés aux rails de maintenance 12, 13, 14, au-dessus des rails maintenance 12,13,14, par l'intermédiaire d'interfaces mécaniques Eq telle que des équerres de fixation. Ces interfaces mécaniques, en U telles qu'illustrées aux figures, laisse un dégagement libre le long des rails pour la circulation des organes de glissement/roulement, premiers organes de roulement/glissement 21 et des deuxièmes organes de roulement/glissement 22. Les rails de maintenance 12, 13, 14 sont typiquement fixés aux flotteurs 11, de préférence directement.

Selon ce mode de réalisation les rails de maintenance qui s'étendent suivant la direction longitudinale X combinent non seulement une fonction de guide pour le chariot de maintenance 2, mais encore de poutres de support, structurelles pour le soutien et la fixation des panneaux photovoltaïques PV de la ou les rangées de panneaux photovoltaïques R1, R2.

Selon un mode de réalisation, l'installation peut comprendre comprenant un onduleur 4 configuré pour transformer le courant continu issu des panneaux photovoltaïques en courant alternatif utilisable par le réseau, ledit onduleur 4 supporté par un ou plusieurs flotteurs.

Avantageusement, l'installation peut comprendre des second rails 40,41 de maintenance, orientés typiquement suivant la direction transversale Y, espacés suivant la direction longitudinale X de part et d'autre de l'onduleur 4, ainsi qu'un chariot de maintenance 43 de l'onduleur circulant sur les second rails 40,41 configuré pour venir à cheval sur l'onduleur, afin de le soulever l'onduleur et l'évacuer.

Le chariot de maintenance peut comprend une motorisation assurant un déplacement motorisé le long des second rails 40, 41. Par exemple, la motorisation 43 du chariot peut comprendre une roue motorisée, typiquement électrique, appartenant aux organes de roulement, configurée pour rouler sur les seconds rails 40,41 1. La motorisation peut encore comprendre encore un système de traction typiquement à câble motorisé.

Alternativement, l'onduleur peut être évacué par le chariot en utilisant les rails 12,13, 14 s'étendant suivant la direction longitudinale X entre les rangées de panneaux photovoltaïques.

La présente divulgation concerne encore un procédé de maintenance d'une installation solaire comprenant un déplacement du chariot le long de la direction longitudinale X, au-dessus d'une rangée des panneaux, par exemple pour le remplacement d'un panneau photovoltaïque, l'inspection de l'installation, ou encore le nettoyage des panneaux photovoltaïques PV.

Ce déplacement et la maintenance/inspection/nettoyage peuvent être mis en œuvre par au moins un opérateur embarqué au chariot, ou alternativement être automatisés en tout ou partie par le chariot qui se déplace de manière autonome, à savoir sans opérateur embarqué.

A cet effet, le chariot de maintenance est motorisé et comporte un module de commande pour assurer son déplacement de manière autonome, ou télécommandé par un opérateur, suivant les rails de maintenance.

La présente divulgation est encore relative à un procédé de maintenance d'une installation solaire selon la présente divulgation comprenant :
- un retrait d'au moins un panneau photovoltaïque PV usé depuis un emplacement du panneau usé sur ladite installation solaire flottante, et son évacuation par soutien du panneau usé par le chariot de maintenance 2, déplacement du chariot de maintenance 2 au moins suivant la direction longitudinal X des rails de maintenance 12, 13, 14, et/ou
- une mise en place d'un panneau photovoltaïque P, en particulier neuf, par son support par le chariot de maintenance 2, et le déplacement du chariot de maintenance 2 le long des rails de maintenance jusqu'à un emplacement de montage sur ladite installation solaire flottante.

### Application industrielle

L'installation selon la présente divulgation permet avantageusement de supprimer le besoin d'allée de maintenance pour les opérateurs, qui constituent des surfaces de l'installation solaire flottante, non recouvertes par les panneaux photovoltaïques, à savoir des surfaces non utilisées pour le captage des rayonnements solaires.

Au contraire, le chariot 2 de maintenance, circulant à cheval au-dessus des panneaux permet de maximiser et densifier le rendement énergétique de production électrique par unité de surface de l'installation solaire flottante, en minimisant les surfaces non utilisées pour le captage des rayonnement solaires.

L'installation présente encore pour avantage, par comparaison à une installation selon l'état de la technique du premier type, de pouvoir diminuer la flottaison et donc la quantité de matière et le volume pour les flotteurs, grâce à une meilleure répartition de la charge de l'opérateur via le chariot et les rails.

D'une manière générale, le chariot de maintenance peut être utilisé pour le nettoyage des panneaux photovoltaïques de la rangée de panneaux photovoltaïques.

A cet effet, le chariot de maintenance peut être pourvu d'un système de nettoyage comprenant :
- des buses de pulvérisation, orientées de sorte à projeter un fluide de nettoyage sur les panneaux photovoltaïques PV de ladite au moins une rangée R1, R2 de panneaux photovoltaïques au-dessus de laquelle se déplace le chariot de maintenance 2, et/ou
- des moyens de brossage tels qu'une brosse, configurés de sorte à brosser les panneaux photovoltaïques PV de ladite au moins une rangée R1, R2 au-dessus de laquelle se déplace le chariot de maintenance 2.

Lorsque le chariot de maintenance est motorisé, une électronique tel qu'un automate programmable peut être configurée pour automatiser le cycle de nettoyage du chariot et son déplacement motorisé, en tout ou partie.

### Liste des signes de référence

- 1. Installation solaire flottante,
- 11. Flotteurs,
- 12, 13, 14. Rails de maintenance,
- 15,16. Rails de transbordement,
- 2. Chariot de maintenance des panneaux,
- 2a. Chariot de maintenance simple,
- 2b. Chariot de maintenance multiple,
- S1, S2. Respectivement première structure verticale et deuxième structure verticale,
- 21, 22. respectivement premiers organes de roulement/glissement et deuxièmes organes de roulement/glissement,
- 23. Structure transversale,
- 3. Chariot de transbordement,
- 30. Châssis (Chariot 3),
- 17a,18a ; 18a, 18b. Rails support (appartenant au chariot de transbordement),
- LS. Liaison(s) souple(s),
- X. Direction longitudinale,
- Y. Direction transversale
- Z. Direction verticale
- R1, R2. Respectivement première et deuxième rangée de panneaux photovoltaïques,
- PV. Panneaux photovoltaïques.

## Revendications

1. Installation solaire flottante (1), comprenant :
- des flotteurs (11) conférant la flottabilité de l'installation,
- au moins une rangée (R1, R2) de panneaux photovoltaïques s'étendant suivant une direction longitudinale (X), fixée aux flotteurs, les panneaux photovoltaïques maintenus hors de l'eau par les flotteurs
et un système de chariot configuré pour la maintenance des panneaux photovoltaïques (PV), comprenant :
- des rails de maintenance (12,13,14) comprenant au moins un premier rail (12) et un deuxième rail (13), s'étendant de manière parallèle, de part et d'autre de ladite au moins une rangée de panneaux photovoltaïques (R1, R2), suivant la direction longitudinale (X), espacés l'un de l'autre suivant une direction transversale (Y),
- au moins un chariot de maintenance (2) comprenant un châssis (20) pourvu de premiers organes de roulement/glissement (21) et des deuxième organes de roulement/glissement (22) configurés respectivement pour circuler respectivement le long d'un premier rail (12) et du second rail (13) en étant guidés par les deux rails, et dans laquelle le chariot est configuré pour être déplacé le long des rails, le châssis configuré pour passer à cheval, au-dessus des panneaux photovoltaïques de ladite au moins une rangée (R1, R2),
et dans lequel les rails de maintenance sont des composants distincts et indépendants des panneaux photovoltaïques, configurés pour assurer la circulation dudit châssis (20) dudit au moins un chariot de maintenance (2) au-dessus des emplacements des panneaux photovoltaïques de la rangée (R1 ; R2) de panneaux photovoltaïques, même si un ou plusieurs des panneaux photovoltaïques sont retirés.

2. Installation selon la revendication 1 dans laquelle le chariot de maintenance (2) et les rails de maintenance (12, 13, 14) sont configurés pour déplacer au moins un opérateur embarqué sur le châssis du charriot de maintenance (2).

3. Installation selon la revendication 1 ou 2, dans laquelle le chariot de maintenance est motorisé et comporte un module de commande pour assurer son déplacement autonome ou télécommandé, suivant les rails de maintenance (12, 13, 14).

4. Installation selon l'une des revendications 1 à 3 comprenant plusieurs rangées de panneaux (R1, R2), s'étendant parallèles les unes aux autres suivant la direction longitudinale (X), les panneaux des différentes rangées espacés les uns des autres suivant la direction transversale (Y) et comprenant une pluralité de couples de rails (12,13 ;13,14), espacés suivant la direction transversale, y compris au moins un premier couple de rails (12,13) autorisant la circulation du chariot de maintenance (2) à cheval sur les panneaux photovoltaïque (PV) d'une première rangée (R1) et au moins un deuxième couple de rails (13,14) autorisant la circulation du chariot de maintenance (2) à cheval sur les panneaux photovoltaïque d'une autre rangée de panneau, distinct de la première rangée (R1) en particulier une deuxième rangée (R2).

5. Installation selon la revendication 4 dans laquelle la première rangée de panneaux photovoltaïques (R1) et la deuxième rangée de panneaux photovoltaïques (R2) sont espacées, suivant la direction transversale (Y) d'un écart δ, autorisant la circulation des premiers organes de roulement/glissement (21) ou des deuxièmes organes de roulement/glissement (22), sur un rail de maintenance (13) intercalaire, et dans laquelle la dimension de l'écart δ est inférieure 40 cm.

6. Installation selon la revendication 4 ou 5, dans laquelle le système de chariot comprend un chariot de transbordement (3), déplaçable le long de rails de transbordement (15, 16) s'étendant en longueur suivant la direction transversale (Y), espacés l'un de l'autre suivant la direction longitudinale (X), et dans laquelle le chariot de transbordement est configuré pour supporter le chariot de maintenance (2, 2a, 2b) et assurer le transfert du chariot de maintenance (2) depuis une première position du chariot de transbordement (3) configurée pour assurer le chargement du chariot de maintenance à partir du premier couple de rails (12,13), et jusqu'à une deuxième position du chariot de transbordement (3) configurée pour assurer le déchargement du chariot de maintenance sur l'autre couple de rails (13,14), en particulier le deuxième couple.

7. Installation selon la revendication 6, dans laquelle le châssis (30) du chariot de transbordement comprend des rails supports (17a, 18a ; 17b, 18b) configurés pour coopérer avec le chariot de maintenance (2), les rails supports configurés pour être alignés respectivement avec les rails du premier couple de rails (12,13) dans la première position du chariot de transbordement (3), et être alignés respectivement avec les rails de l'autre couple de rails (13,14), dans la deuxième position du chariot de transbordement (3).

8. Installation solaire flottante selon l'une des revendications 1 à 7 dans laquelle le chariot de maintenance des panneaux (2) comprend une structure de portique, en U inversé, comprenant une première structure verticale (S1), assurant le support des premiers organes de roulement/glissement (21), une deuxième structure verticale (S2) assurant le support des deuxièmes organes de roulement/glissement (22), les premiers organes de roulement/glissement (21) et les deuxièmes organes de roulement/glissement configurés pour circuler sur le premier rail (12) et le second rail (13) agencés en tout ou partie à une hauteur sous le niveau des panneaux de ladite au moins rangée (R1 ; R2), et une structure transversale (23), s'étendant suivant la direction transversale (Y), destinée à circuler au-dessus des panneaux de ladite au moins rangée (R1 ; R2), la structure transversale reliant la première structure verticale (S1) et la deuxième structure verticale (S2).

9. Installation selon la revendication 8, dans laquelle le chariot de maintenance (2) comprend une extension (EXT) repliable configurée pour passer d'une position escamotée (P2), de moindre encombrement sur la structure de portique, jusqu'à une position déployée (P1) pour laquelle ladite extension (EXT) s'étend en porte-à-faux de la structure de portique du chariot pour venir à cheval d'une rangée de panneaux photovoltaïques, consécutive à ladite au moins une rangée (R1, R2) au-dessus de laquelle circule la structure transversale (23).

10. Installation solaire flottante selon l'une des revendications 1 à 9 dans laquelle le chariot de maintenance (2) de panneau est un chariot de maintenance simple (2a) s'étendant suivant la direction transversale (Y) pour venir à cheval sur une unique rangée de panneaux photovoltaïques (R1 ou R2) ou encore le chariot de maintenance (2) de panneau est un chariot de maintenance multiple (2b) s'étendant suivant la direction transversale (Y) pour venir à cheval sur une pluralité de rangée de panneaux solaire (R1, R2).

11. Installation solaire flottante selon l'une des revendications 1 à 10 dans laquelle les panneaux photovoltaïques de ladite au moins une rangée (R1, R2) sont fixés aux rails de maintenance, au-dessus des rails de maintenance (12,13,14), par l'intermédiaire d'interfaces mécaniques (Eq) telle que des équerres de fixation, laissant un dégagement libre le long des rails pour la circulation des organes de glissement/roulement, premiers organes de roulement/glissement (21) et des deuxièmes organes de roulement/glissement (22).

12. Installation selon l'une des revendications 1 à 11 dans laquelle les rails de maintenance (12, 13, 14) sont fixés aux flotteurs (11).

13. Installation selon l'une des revendications 1 à 12, dans laquelle le chariot de maintenance est pourvu d'un système de nettoyage comprenant :
- des buses de pulvérisation, orientées de sorte à projeter un fluide de nettoyage sur les panneaux photovoltaïques (PV) de la rangée (R1, R2) au-dessus de laquelle se déplace le chariot de maintenance (2), et/ou
- des moyens de brossage tels qu'une brosse, configurés de sorte à brosser les panneaux photovoltaïques (PV) de la rangée (R1, R2) au-dessus de laquelle se déplace le chariot de maintenance (2).

14. Installation solaire flottante selon l'une des revendications 1 à 13, comprenant un onduleur (4) configuré pour transformer le courant continu issu des panneaux photovoltaïques en courant alternatif utilisable par le réseau supporté par un ou plusieurs flotteurs, et dans laquelle l'installation comprend des second rails (40,41) de maintenance, orientés suivant la direction transversale (Y), espacés suivant la direction longitudinale (X) de part et d'autre du dispositif onduleur, ainsi qu'un chariot de maintenance (43) de l'onduleur circulant sur les second rails (40,41) configuré pour soutenir l'onduleur et l'évacuer.

15. Procédé de maintenance d'une installation solaire selon l'une des revendications 1 à 14, comprenant un déplacement du chariot de maintenance (2), le long de la direction longitudinale X, au-dessus d'une rangée des panneaux photovoltaïques, convenant pour le remplacement d'un panneau photovoltaïque, l'inspection de l'installation, ou encore le nettoyage des panneaux photovoltaïques.

16. Procédé de maintenance d'une installation solaire selon l'une des revendications 1 à 14, comprenant :
- un retrait d'au moins un panneau photovoltaïque (PV) usé depuis un emplacement du panneau usé sur ladite installation solaire flottante, et son évacuation par un soutien du panneau usé par le chariot de maintenance (2), et un déplacement du chariot de maintenance (2) au moins suivant la direction longitudinal X des rails de maintenance (12, 13, 14), et/ou
- une mise en place d'un panneau photovoltaïque (PV), en particulier neuf, par son support par le chariot de maintenance (2), et le déplacement du chariot de maintenance (2) le long des rails de maintenance jusqu'à un emplacement de montage sur ladite installation solaire flottante.

## Patentansprüche

1. Schwimmende Solaranlage (1), umfassend:
- Schwimmer (11), die der Anlage Auftrieb verleihen,
- wenigstens eine Reihe (R1, R2) von Photovoltaikmodulen, die sich in Längsrichtung (X) erstrecken und an den Schwimmern befestigt sind, wobei die Photovoltaikmodule durch die Schwimmer über Wasser gehalten werden,
und ein Wagensystem, das für die Wartung der Photovoltaikmodule (PV) ausgelegt ist und umfasst:
- Wartungsschienen (12, 13, 14), die wenigstens eine erste Schiene (12) und eine zweite Schiene (13) umfassen, die sich parallel zueinander auf beiden Seiten der wenigstens einen Reihe von Photovoltaikmodulen (R1, R2) in Längsrichtung (X) erstrecken, die in einer Querrichtung (Y) zueinander beabstandet sind,
- wenigstens einen Wartungswagen (2) mit einem Rahmen (20), der mit ersten Lauf-/Gleitelementen (21) und zweiten Lauf-/Gleitelementen (22) versehen ist, die jeweils dazu ausgebildet sind, entlang einer ersten Schiene (12) bzw. entlang der zweiten Schiene (13) zu laufen und von den beiden Schienen geführt werden, und wobei der Wagen dazu ausgebildet ist, entlang der Schienen bewegt zu werden, wobei der Rahmen dazu ausgebildet ist, über die Photovoltaikmodule der wenigstens einen Reihe (R1, R2) hinweg zu fahren,
und wobei die Wartungsschienen separate und von den Photovoltaikmodulen unabhängige Komponenten sind, die dazu ausgebildet sind, die Bewegung des Rahmens (20) des wenigstens einen Wartungswagens (2) über die Standorte der Photovoltaikmodule der Reihe (R1; R2) der Photovoltaikmodule zu gewährleisten, auch wenn ein oder mehrere der Photovoltaikmodule entfernt sind.

2. Anlage nach Anspruch 1, wobei der Wartungswagen (2) und die Wartungsschienen (12, 13, 14) dazu ausgebildet sind, wenigstens einen auf dem Rahmen des Wartungswagens befindlichen Bediener (2) zu bewegen.

3. Anlage nach Anspruch 1 oder 2, wobei der Wartungswagen motorisiert ist und ein Steuermodul aufweist, um seine autonome oder ferngesteuerte Bewegung entlang der Wartungsschienen (12, 13, 14) zu gewährleisten.

4. Anlage nach einem der Ansprüche 1 bis 3, mit mehreren Reihen von Paneelen (R1, R2), die sich parallel zueinander in Längsrichtung (X) erstrecken, wobei die Paneele der verschiedenen Reihen in Querrichtung (Y) zueinander beabstandet sind und eine Vielzahl von Schienenpaaren (12, 13; 13, 14) umfassen, die in Querrichtung beabstandet sind, einschließlich wenigstens eines ersten Schienenpaares (12, 13), das die Bewegung des Wartungswagens (2) über die Photovoltaikmodule (PV) einer ersten Reihe (R1) und wenigstens ein zweites Schienenpaar (13, 14), das die Bewegung des Wartungswagens (2) über die Photovoltaikmodule einer anderen Modulreihe, die von der ersten Reihe (R1) getrennt ist, insbesondere einer zweiten Reihe (R2), ermöglicht.

5. Anlage nach Anspruch 4, wobei die erste Reihe von Photovoltaikmodulen (R1) und die zweite Reihe von Photovoltaikmodulen (R2) in Querrichtung (Y) um einen Abstand δ voneinander beabstandet sind, der die Bewegung der ersten Lauf-/Gleitelemente (21) oder der zweiten Lauf-/Gleitelemente (22) auf einer dazwischenliegenden Wartungsschiene (13) ermöglichen, und wobei der Abstand δ kleiner als 40 cm ist.

6. Anlage nach Anspruch 4 oder 5, wobei das Wagensystem einen Umschlagwagen (3) umfasst, der entlang von Umschlagbahnen (15, 16) bewegbar ist, die sich in Längsrichtung (Y) erstrecken, die in Längsrichtung (X) voneinander beabstandet sind, und wobei der Umschlagwagen dazu ausgebildet ist, den Wartungswagen (2, 2a, 2b) zu halten und den Transfer des Wartungswagens (2) aus einer ersten Position des Umschlagwagens (3), die zum Aufnehmen des Wartungswagens von dem einen Schienenpaar (12, 13) ausgebildet ist, in eine zweite Position des Umschlagwagens (3), die zum Entladen des Wartungswagens auf dem anderen Schienenpaar, insbesondere dem zweiten Schienenpaar (13, 14) ausgebildet ist, zu gewährleisten.

7. Anlage nach Anspruch 6, wobei der Rahmen (30) des Umschlagwagens Tragschienen (17a, 18a; 17b, 18b) umfasst, die dazu ausgebildet sind, mit dem Wartungswagen (2) zusammenzuwirken, wobei die Tragschienen dazu ausgebildet sind, in der ersten Position des Umschlagwagens (3) jeweils mit den Schienen des ersten Schienenpaares (12, 13) zu fluchten und in der zweiten Position des Umschlagwagens (3) jeweils mit den Schienen des anderen Schienenpaares (13, 14) zu fluchten.

8. Schwimmende Solaranlage nach einem der Ansprüche 1 bis 7, wobei der Wartungswagen für die Paneele (2) eine umgekehrt U-förmige Portalstruktur umfasst, die eine erste vertikale Struktur (S1) umfasst, die die ersten Lauf-/Gleitelemente (21) trägt, eine zweite vertikale Struktur (S2), die die zweiten Lauf-/Gleitelemente (22) trägt, wobei die ersten Lauf-/Gleitelemente (21) und die zweiten Lauf-/Gleitelemente dazu ausbegildet sind, auf der ersten Schiene (12) und der zweiten Schiene (13) zu laufen, die ganz oder teilweise in einer Höhe unterhalb des Niveaus der Paneele der wenigstens einen Reihe (R1; R2) angeordnet sind, und eine sich in Querrichtung (Y) erstreckende Querstruktur (23), die dazu bestimmt ist, über den Paneelen der wenigstens einen Reihe (R1; R2) zu laufen, wobei die Querstruktur die erste vertikale Struktur (S1) und die zweite vertikale Struktur (S2) verbindet.

9. Vorrichtung nach Anspruch 8, wobei der Wartungswagen (2) eine klappbare Verlängerung (EXT) umfasst, die dazu ausgebildet ist, sich aus einer eingeklappten Position (P2), in der sie weniger Platz auf der Portalstruktur einnimmt, in eine ausgefahrene Position (P1) zu bewegen, in der sich die Verlängerung (EXT) freitragend von der Portalstruktur des Wagens erstreckt, um eine Reihe von Photovoltaikmodulen zu überspannen, die auf die wenigstens eine Reihe (R1, R2) folgt, über der sich die Querstruktur (23) bewegt.

10. Schwimmende Solaranlage nach einem der Ansprüche 1 bis 9, wobei der Wartungswagen für die Paneele (2) ein einfacher Wartungswagen (2a) ist, der sich in Querrichtung (Y) erstreckt, um eine einzige Reihe von Photovoltaikmodulen (R1 oder R2) zu überbrücken, oder der Wartungswagen (2) für die Solarpaneele ein Mehrfach-Wartungswagen (2b) ist, der sich in Querrichtung (Y) erstreckt, um mehrere Reihen von Solarpaneelen (R1, R2) zu überbrücken.

11. Schwimmende Solaranlage nach einem der Ansprüche 1 bis 10, wobei die Photovoltaikmodule der wenigstens einen Reihe (R1, R2) an den Wartungsschienen (12, 13, 14) über mechanische Schnittstellen (Eq) wie Befestigungswinkel befestigt sind, wobei entlang der Schienen ein Freiraum für die Bewegung der Lauf-/Gleitelemente, nämlich der ersten Lauf-/Gleitelemente (21) und zweiten Lauf-/Gleitelemente (22) verbleibt.

12. Anlage nach einem der Ansprüche 1 bis 11, wobei die Wartungsschienen (12, 13, 14) an den Schwimmern (11) befestigt sind.

13. Anlage nach einem der Ansprüche 1 bis 12, wobei der Wartungswagen mit einem Reinigungssystem versehen ist, das umfasst:
- Sprühdüsen, die so ausgerichtet sind, dass sie ein Reinigungsfluid auf die Photovoltaikmodule (PV) der Reihe (R1, R2) sprühen, über der sich der Wartungswagen (2) bewegt,
- Bürstenmittel wie eine Bürste, die so ausgebildet sind, dass sie die Photovoltaikmodule (PV) der Reihe (R1, R2) bürsten, über der sich der Wartungswagen (2) bewegt.

14. Schwimmende Solaranlage nach einem der Ansprüche 1 bis 13, mit einem Wechselrichter (4), der dazu ausgebildet ist, den von den Photovoltaikmodulen erzeugten Gleichstrom in vom Netz verwendbaren Wechselstrom umzuwandeln, der von einem oder mehreren Schwimmern getragen wird, und wobei die Anlage zweite Wartungsschienen (40, 41) umfasst, die in Querrichtung (Y) ausgerichtet sind, die in Längsrichtung (X) beiderseits der Wechselrichtervorrichtung beabstandet sind, sowie einen Wartungswagen (43) für den Wechselrichter, der auf den zweiten Schienen (40, 41) läuft und dazu ausgebildet ist, den Wechselrichter zu tragen und zu entfernen.

15. Verfahren zur Wartung einer Solaranlage nach einem der Ansprüche 1 bis 14, umfassend eine Bewegung des Wartungswagens (2) entlang der Längsrichtung X über eine Reihe von Photovoltaikmodulen, geeignet zum Austausch eines Photovoltaikmoduls, zur Inspektion der Anlage oder zur Reinigung der Photovoltaikmodule.

16. Verfahren zur Wartung einer Solaranlage nach einem der Ansprüche 1 bis 14, umfassend:
- Entfernen wenigstens eines abgenutzten Photovoltaikmoduls (PV) von einer Position des abgenutzten Moduls auf der schwimmenden Solaranlage und dessen Abtransport durch Abstützen des abgenutzten Moduls durch den Wartungswagen (2) und Bewegen des Wartungswagens (2) wenigstens entlang der Längsrichtung X der Wartungsschienen (12, 13, 14) und/oder
- Einsetzen eines insbesondere neuen Photovoltaikmoduls (PV) durch dessen Halterung durch den Wartungswagen (2) und Bewegen des Wartungswagens (2) entlang der Wartungsschienen zu einer Montageposition auf der schwimmenden Solaranlage.

## Claims

1. Floating solar installation (1), comprising:
- floats (11) providing the buoyancy of the installation,
- at least one row (R1, R2) of photovoltaic panels extending in a longitudinal direction (X), fixed to the floats, the photovoltaic panels held off the water by the floats and a trolley system configured for maintenance of the photovoltaic panels (PV), comprising:
- maintenance rails (12, 13, 14) comprising at least a first rail (12) and a second rail (13), extending in a parallel manner, on either side of said at least one row of photovoltaic panels (R1, R2), in the longitudinal direction (X), spaced apart from one another in a transverse direction (Y)
- at least one maintenance trolley (2) comprising a chassis (20) provided with first rolling/sliding members (21) and with second rolling/sliding members (22) configured respectively to travel along a first rail (12) and the second rail (13), respectively, while being guided by the two rails, and wherein the trolley is configured to be moved along the rails, the chassis configured to pass astride, above the photovoltaic panels of said at least one row (R1, R2),
and wherein the maintenance rails are separate and independent components of the photovoltaic panels, configured to ensure the circulation of said chassis (20) of said at least one maintenance trolley (2) above the locations of the photovoltaic panels of the row (R1; R2) of photovoltaic panels, even if one or more of the photovoltaic panels are removed.

2. Installation according to claim 1, wherein the maintenance trolley (2) and the maintenance rails (12, 13, 14) are configured to move at least one operator on board the chassis of the maintenance trolley (2).

3. Installation according to claim 1 or 2, wherein the maintenance trolley is motor-driven and includes a control module for providing its autonomous or remote-controlled movement, according to the maintenance rails (12, 13, 14).

4. Installation according to one of claims 1 to 3, comprising several rows of panels (R1, R2), extending parallel to one another in the longitudinal direction (X), the panels of the different rows spaced apart from one another in the transverse direction (Y) and comprising a plurality of pairs of rails (12, 13; 13, 14), spaced apart in the transverse direction, including at least one first pair of rails (12, 13) allowing the maintenance trolley (2) to travel astride the photovoltaic panels (PV) of a first row (R1) and at least one second pair of rails (13, 14) allowing the maintenance trolley (2) to travel astride the photovoltaic panels of another row of panels, distinct from the first row (R1), in particular a second row (R2).

5. Installation according to claim 4, wherein the first row of photovoltaic panels (R1) and the second row of photovoltaic panels (R2) are spaced apart, in the transverse direction (Y) by a gap δ, allowing the first rolling/sliding members (21) or the second rolling/sliding members (22) to travel on an interposed maintenance rail (13), and wherein the dimension of the gap δ is less than 40 cm.

6. Installation according to claim 4 or 5, wherein the trolley system comprises a transfer trolley (3), displaceable along transfer rails (15, 16) extending lengthwise in the transverse direction (Y), spaced apart from one another in the longitudinal direction (X), and wherein the transfer trolley is configured to support the maintenance trolley (2, 2a, 2b) and ensure the transfer of the maintenance trolley (2) from a first position of the transfer trolley (3) configured to ensure the loading of the maintenance trolley from the first pair of rails (12, 13), and to a second position of the transfer trolley (3) configured to ensure the unloading of the maintenance trolley onto the other pair of rails (13, 14), in particular the second pair.

7. Installation according to claim 6, wherein the chassis (30) of the transfer trolley comprises support rails (17a, 18a; 17b, 18b) configured to cooperate with the maintenance trolley (2), the support rails configured to be aligned respectively with the rails of the first pair of rails (12, 13) in the first position of the transfer trolley (3), and to be aligned respectively with the rails of the other pair of rails (13, 14), in the second position of the transfer trolley (3).

8. Floating solar installation according to one of claims 1 to 7, wherein the maintenance trolley of the panels (2) comprises a gantry structure, in the form of an inverted U, comprising a first vertical structure (S1), providing the support of the first rolling/sliding members (21), a second vertical structure (S2) providing the support of the second rolling/sliding members (22). The first rolling/sliding members (21) and the second rolling/sliding members are configured to run on the first rail (12) and the second rail (13), arranged wholly or partly at a height below the level of the panels of said at least one row (R1; R2); and a transverse structure (23), extending in the transverse direction (Y), intended to circulate above the panels of said at least one row (R1; R2), the transverse structure connecting the first vertical structure (S1) and the second vertical structure (S2).

9. Installation according to claim 8, wherein the maintenance trolley (2) comprises a foldable extension (EXT) configured to pass from a retracted position (P2), of lesser bulk on the gantry structure, to a deployed position (P1) for which said extension (EXT) extends in cantilever fashion from the gantry structure of the trolley to come astride a row of photovoltaic panels, consecutive to said at least one row (R1, R2) above which the transverse structure (23) circulates.

10. Floating solar installation according to one of claims 1 to 9, wherein the maintenance trolley (2) is a simple maintenance trolley (2a) extending in the transverse direction (Y) to straddle a single row of photovoltaic panels (R1 or R2), or the maintenance trolley (2) is a multiple maintenance trolley (2b) extending in the transverse direction (Y) to straddle a plurality of rows of solar panels (R1, R2).

11. Floating solar installation according to one of claims 1 to 10, wherein the photovoltaic panels of said at least one row (R1, R2) are fixed to the maintenance rails, above the maintenance rails (12, 13, 14), via mechanical interfaces (Eq) such as fixing brackets, leaving a free clearance along the rails for the circulation of the sliding/rolling members, first rolling/sliding members (21) and second rolling/sliding members (22).

12. Installation according to one of claims 1 to 11, wherein the maintenance rails (12, 13, 14) are fixed to the floats (11).

13. Installation according to one of claims 1 to 12, wherein the maintenance trolley is provided with a cleaning system comprising:
- spray nozzles, oriented so as to spray a cleaning fluid onto the photovoltaic panels (PV) of the row (R1, R2) above which the maintenance trolley (2) moves, and/or
- brushing means such as a brush, configured so as to brush the photovoltaic panels (PV) of the row (R1, R2) above which the maintenance trolley (2) moves.

14. Floating solar installation according to one of claims 1 to 13, comprising an inverter (4) configured to transform the direct current coming from the photovoltaic panels into alternating current that can be used by the network supported by one or more floats, and wherein the installation comprises second maintenance rails (40, 41), oriented in the transverse direction (Y), spaced apart in the longitudinal direction (X) on either side of the inverter, as well as a maintenance trolley (43) of the inverter circulating on the second rails (40, 41) configured to lift the inverter and evacuate it.

15. Method for maintaining a solar installation according to any one of claims 1 to 14, comprising a movement of the maintenance trolley (2), in the longitudinal direction X, above a row of the photovoltaic panels, suitable for replacing a photovoltaic panel, inspecting the installation, or cleaning the photovoltaic panels.

16. Method for maintaining a solar installation according to any one of claims 1 to 14, comprising:
- removing at least one spent photovoltaic panel (PV) from a location of the spent panel on said floating solar installation, and evacuating it by supporting the spent panel by the maintenance trolley 2, moving the maintenance trolley 2 at least in the longitudinal direction X of the maintenance rails 12, 13, 14, and/or
- a placement of a photovoltaic panel (PV), in particular a new one, by its support by the maintenance trolley 2, and the movement of the maintenance trolley 2 along the maintenance rails to a mounting location on said floating solar installation.
